# EUROPÄISCHE PATENTSCHRIFT

(11) **EP 1 581 733 B1**
(45) Veröffentlichungstag und Bekanntmachung des Hinweises auf die Patenterteilung: **07.06.2006**
(21) Anmeldenummer: 03789253.6
(22) Anmeldetag: 12.12.2003
(51) Int. Cl.: F02D 41/02, F02D 41/14, F02D 41/34

(54) **VERFAHREN ZUR STEUERUNG DER TEMPERATUR EINES KATALYSATORS SOWIE MEHRZYLINDERMOTOR MIT LAMBDASPLITFÄHIGER ABGASREINIGUNGSANLAGE**
METHOD FOR CONTROLLING THE TEMPERATURE OF A CATALYST AND MULTICYLINDER ENGINE COMPRISING A LAMBDA SPLITTING EXHAUST GAS CLEANING SYSTEM
PROCEDE DE REGULATION DE LA TEMPERATURE D'UN CATALYSEUR, ET MOTEUR MULTICYLINDRE POURVU D'UN SYSTEME DE PURIFICATION DE GAZ D'ECHAPPEMENT A DIVISION LAMBDA

(30) Priorität: 30.12.2002 DE 10261911
(43) Veröffentlichungstag der Anmeldung: 05.10.2005
(73) Patentinhaber: Volkswagen Aktiengesellschaft, 38436 Wolfsburg (DE)
(72) Erfinder: POTT, Ekkehard, 38518 Gifhorn (DE); PHILIPP, Kai, 38179 Schwülper (DE); BREE, Eric, 38557 Osloss (DE)
(74) Vertreter: Gulde, Klaus W.
(86) Internationale Anmeldenummer: PCT/EP2003/014156
(87) Internationale Veröffentlichungsnummer: WO 2004/059150

(56) Entgegenhaltungen:
- EP-A- 0 950 803
- EP-A- 1 205 648
- DE-A- 4 310 145
- DE-A- 10 005 954
- US-A1- 2002 131 914

## Beschreibung

Die Erfindung betrifft ein Verfahren zur Steuerung der Temperatur zumindest eines in einer Abgasreinigungsanlage eines magerlauffähigen Mehrzylindermotors angeordneten Katalysators, bei dem Energie mittels eines Lambdasplits in die Abgasreinigungsanlage einbringbar ist, sowie einen entsprechenden Mehrzylindermotor mit einer lambdasplitfähigen Abgasreinigungsanlage.

Zur Nachbehandlung von Abgasen von Verbrennungskraftmaschinen ist es allgemein üblich, diese katalytisch zu reinigen. Dazu wird das Abgas über mindestens einen Katalysator geleitet, der eine Konvertierung einer oder mehrerer Schadstoffkomponenten des Abgases vornimmt. Es sind unterschiedliche Arten von Katalysatoren bekannt. Oxidationskatalysatoren fördern die Oxidation von unverbrannten Kohlenwasserstoffen (HC) und Kohlenmonoxid (CO), während Reduktionskatalysatoren eine Reduzierung von Stickoxiden (NOₓ) des Abgases unterstützen. Zudem werden 3-Wege-Katalysatoren verwendet, um die Konvertierung der drei vorgenannten Komponenten (HC, CO, NOₓ) gleichzeitig zu katalysieren.

Daneben sind auch Speicherkatalysatoren, beispielsweise NOₓ-Speicherkatalysatoren, bekannt. Diese werden bei der Abgasreinigung von Verbrennungskraftmaschinen eingesetzt, die aus Gründen einer Verbrauchsoptimierung wenigstens zeitweise in einem mageren Betriebsmodus, das heißt mit einem sauerstoffreichen Abgas mit λ > 1, betrieben werden, wobei in hohem Maße Stickoxide NOₓ entstehen. Die Stickoxide NOx können bei einer katalytischen oxidativen Umsetzung von unverbrannten Kohlenwasserstoffen HC und Kohlenmonoxid CO Stickoxide NOₓ nicht vollständig zu umweltneutralem Stickstoff umgesetzt werden. Zur Abhilfe werden vorgenannte NOₓ-Speicherkatalysatoren in den Abgaskanälen von Verbrennungskraftmaschinen angeordnet, die in mageren Betriebsphasen NOₓ als Nitrat einlagern. Der NOₓ-Speicherkatalysator muss in wiederkehrenden Abständen durch Umschaltung in einen fetten oder unterstöchiometrischen Betrieb (λ ≤ 1) der Verbrennungskraftmaschine regeneriert werden.

Vorgenannte Katalysatoren altern durch die Beaufschlagung mit hohen Temperaturen, so dass die Spitzen-Konvertierungsrate gegenüber einem ungeschädigten Katalysator abnimmt. Zur Minderung der Katalysatoralterung wird die maximal zulässige Temperatur im Abgassystem überwacht und durch Einstellung von Motorbetriebsparametern, vorzugsweise des Verbrennungslambdas, begrenzt.

Auf der anderen Seite ist es notwendig, eine Katalysatorheizung, das heißt einen Energieeintrag in die Abgasanlage vorzunehmen, um das optimale Temperaturfenster des Katalysators zu erreichen oder um bei NOₓ-Speicherkatalysatoren eine Entschwefelung durchzuführen, da diese durch den im Kraftstoff enthaltenen Schwefel vergiftet werden. Durch das Katalysatorheizen wird der NOₓ-Speicherkatalysator von eingelagertem Schwefel befreit. Für die Desorption des in Form von Sulfat eingelagerten Schwefels bedarf es einer Mindest-Temperatur, die bei zirka 600 °C liegt.

Das Heizen von Katalysatoren ist insbesondere bei der Verwendung von Vor- und Hauptkatalysatoren problematisch, da bei dem Bestreben, den Hauptkatalysator auf die gewünschte Temperatur zu bringen, die Vorkatalysatoren thermisch überlastet werden können.

Um einen Energieeintrag in die Abgasreinigungsanlage zielgerichtet zu gestalten, vorzugsweise zur Entschwefelung von NOₓ-Speicherkatatysatoren, kann das Heizen des Katalysators, insbesondere eines Hauptkatalysators, derart erfolgen, dass der Katalysator gleichzeitig mit magerem und fettem Abgas beaufschlagt wird. So wird beispielsweise bei einem gewünschten Abgaslambda vor dem Hauptkatalysator von 1,0 das Abgas in einem der beiden beaufschlagenden Pfade um einen vorgegebenen Betrag in Richtung "fett" verschoben und in dem anderen Pfad in entsprechender Weise in die entgegengesetzte Richtung. Vorteil dieser Maßnahme ist, dass das Mischabgas vor dem Katalysator gleichzeitig hohe Sauerstoff- und Schadstoffkonzentrationen enthält. Dadurch erfolgt am Katalysator eine hohe Umsetzung chemisch gebundener Energie. Da die zur Katalysatorerwärmung benötigte Energie erst auf dem Katalysator in Wärme umgewandelt wird, entfallen die thermischen Verluste auf dem Weg durch die nicht-adiabatische Abgasanlage. Zudem werden die gegebenenfalls vorhandenen Vorkatalysatoren nicht thermisch überlastet, so dass sich deren Lebensdauersicherheit erheblich erhöht.

Problematisch bei dieser Verfahrensweise ist, dass die Gefahr einer Überlastung des Hauptkatalysators steigt, da infolge starker kataiytischer, Aktivität durch einen hohen chemischen Energieumsatz am Hauptkatalysator zumindest eine lokale thermische Überlastung nicht ausgeschlossen werden kann. Zudem kann ein Katalysator nur mittels Lambdasplit geheizt werden, wenn dieser zumindest teilweise aktiv, das heißt erwärmt ist, da für den chemischen Energieeintrag dessen Aktivität Voraussetzung ist.

Es ist daher Aufgabe der Erfindung, ein Verfahren zur Steuerung der Temperatur eines in einer Abgasreinigungsanlage eines magerlauffähigen Mehrzylindermotors angeordneten Katalysators, bei dem Energie mittels eines Lambdasplits in die Abgasreinigungsanlageanlage eingetragen wird, sowie einen entsprechenden magerlauffähigen Mehrzylindermotor mit lambdasplitfähiger Abgasreinigungsanlage zu schaffen, bei dem die Gefahr einer thermischen Überlastung des Katalysators sicher vermieden wird.

Diese Aufgabe wird durch ein Verfahren mit den im Anspruch 1 genannten Merkmalen sowie einen Mehrzylindermotor mit den in Anspruch 13 genannten Merkmalen gelöst.

Erfindungsgemäß ist ein Verfahren zur Steuerung der Temperatur eines in einer Abgasreinigungsanlage eines magerlauffähigen Mehrzylindermotors angeordneten Katalysators vorgesehen, bei dem Energie mittels eines Lambdasplits in die Abgasreinigungsanlage einbringbar ist, wobei die Höhe beziehungsweise eine Begrenzung des Energieeintrages in Abhängigkeit von mindestens einem der Parameter Katalysatortemperatur, Abgastemperatur und Abgasmassenstrom und/oder in Abhängigkeit von mindestens einem der Parameter Änderung der Katalysatortemperatur, der Abgastemperatur und des Abgasmassenstromes (1. Ableitung) und/oder in Abhängigkeit von mindestens einem der Parameter Änderungsgeschwindigkeit der Katalysatortemperatur, der Abgastemperatur und des Abgasmassenstromes (2. Ableitung) erfolgt.

Vorzugsweise ist die lambdasplitfähige Abgasreinigungsanlage derart ausgestaltet, dass zwischen dem Mehrzylindermotor und dem zumindest einen Katalysator mindestens zwei Passagen beziehungsweise Abgaspfade befindlich sind, die jeweils mit einem vorgebbaren Lambda beaufschlagbar sind, wobei besonders bevorzugt ist, dass die Abgasreinigungsanlage mindestens einen Hauptkatalysator, dessen Temperatur verfahrensgemäß zu steuern ist, und mindestens zwei vorgeordnete Vorkatalysatoren aufweist, wobei jeder Vorkatalysator in einem eigenen Abgaspfad angeordnet ist.

Vorzugsweise erfolgt die Steuerung des chemischen Energieeintrages durch Begrenzung des Splitfaktors. Dieser wird hier als Maß der Anfettung in einem der Abgaspfade verstanden. Ein Splitfaktor von 25 % bei einem Mischlambda-Sollwert von 1,0 bedeutet somit, dass bei einem 4-Zylinder-Motor zwei Zylinder mit Lambda = 0,75 betrieben werden und zwei Zylinder mit Lambda = 1,5. Bei einer Anforderung zum Heizen des Katalysators wird eine Anforderung zum Energieeintrag in die Abgasreinigungsanlage in Abhängigkeit von der aktuellen Katalysatortemperatur oder der Differenz der aktuellen Katalysatortemperatur von einer vorgebbaren Zieltemperatur definiert. Normalerweise ist ein schnelles Aufheizen des Katalysators auf die Zieltemperatur erwünscht, so dass hohe Energieeinträge in die Abgasanlage und damit ein hoher Grund-Splitfaktor gefordert werden. Um optimale Konvertierungsraten zu erzielen, wird ein Mischlambda-Sollwert von 1,0 gefordert. Bei einem hohen chemischen Anteil am Heizvorgang steigt jedoch im Gegensatz zu den überwiegend thermischen Heizverfahren nach dem Stand der Technik das Risiko einer Katalysatorüberlastung, so dass die erfindungsgemäße Begrenzung des Energieeintrages zur Steuerung der Temperatur des Katalysators von besonderem Vorteil ist.

Erfindungsgemäß erfolgt die Begrenzung des chemischen Energieeintrages beziehungsweise des Splitfaktors in Abhängigkeit vorgenannter Parameter bei:
- steigender gemessener oder modellierter Kätalysatortemperatur unabhängig von der Differenz zur Zieltemperatur, um Katalysatorschäden zu vermeiden, insbesondere wenn die Zieltemperatur nahe an der minimalen irreversiblen thermischen Schädigungstemperatur liegt,
- hohen positiven Temperaturgradienten im Hauptkatalysator, insbesondere bei hohen Temperaturen im Hauptkatalysator, zur Berücksichtigung eines inhomogenen Temperaturverlaufs im Hauptkatalysator, wobei die Begrenzung umso ausgeprägter ausfallen muss, wenn zusätzlich der positive Temperaturgradient eine progressive Zunahme aufweist, da hier das Risiko eines "Durchgehens" des Katalysators besonders hoch ist, und
- sinkendem Abgasmassenstrom, da der Kühleffekt des gegenüber der Katalysatortemperatur kühleren Abgasmassenstroms abnimmt, wobei bei hohen negativen Abgasmassenstromgradienten, beispielsweise bei einem Schaltvorgang, dem Übergang auf Niedriglast oder gefeuerten Schub, die Begrenzung stärker ausfallen soll, da HC- und O₂-Gehalt im Abgas in diesen Betriebssituationen ohnehin kurzzeitig stark zunehmen.

Der auf dem Katalysator umsetzbare chemische Energieanteil des Abgases wird durch den verfügbaren Reduktionsmittel- und Sauerstoffmassenstrom bestimmt. Daher wird bei Regelung auf einen Lambda-Sollwert vor dem Katalysator vorzugsweise das Lambda im mageren Pfad auf den aus dem geforderten Splitfaktor resultierenden mageren Lambdawert in Abhängigkeit vom gemessenen Lambda vor oder hinter dem Hauptkatalysator geregelt, während der fette Pfad vorgesteuert wird. Dies verhindert Probleme bei der Regelung durch eine üblicherweise hinter dem Katalysator angeordnete Sonde durch Messfehler an der Lambdasonde hinter dem Vorkatalysator des fetten Pfades, zum Beispiel durch Wasserstoffquerempfindlichkeit.

Bei sehr magerer Einstellung auf dem mageren Pfad, das heißt bei Lambda > 1,4 und insbesondere vorzugsweise bei Lambda > 1,55, kann die Stabilität des Brennverfahrens an ihre Grenzen stoßen, so dass vermehrte Aussetzer auftreten. Daher wird bei einer Ausführungsform des erfindungsgemäßen Verfahrens beim Vorliegen von extrem mageren Lambdawerten auf dem mageren Pfad entweder eine zumindest temporäre Anfettung des Gesamtgemisches zugelassen, sofern die Vorsteuerung des fetten Pfades nicht entsprechend angepasst wird, oder die Vorsteuerung des fetten Pfades in Richtung "mager" beeinflusst unter Inkaufnahme einer Rücknahme des Splitfaktors und damit des Energieeintrags. Vorzugsweise erfolgt dies, wenn der Lambdawert im mageren Pfad Werte von > 1,3, am meisten bevorzugt > 1,45, annimmt.

Das erfindungsgemäße Verfahren findet vorzugsweise Anwendung bei NOₓ₋Speicherkatalysatoren mit gegebenenfalls vorgeschalteten Vorkatalysatoren zur Entschwefelung.

Vorteilhafterweise wird mit dem erfindungsgemäßen Verfahren eine geringere Belastung des Katalysatorsystems als nach bekannten Verfahren des Standes der Technik mit weniger restriktiv ausgelegtem Lambdasplit erreicht.

Der erfindungsgemäße magerlauffähige Mehrzylindermotor mit einer lambdasplitfähigen Abgasreinigungsanlage, in der zumindest ein Katalysator angeordnet ist, weist erfindungsgemäß Mittel auf, mit denen in Abhängigkeit von mindestens einem der Parameter Katalysatortemperatur, Abgastemperatur und Abgasmassenstrom und/oder in Abhängigkeit von mindestens einem der Parameter Änderung der Katalysatortemperatur, der Abgastemperatur und des Abgasinassenstromes (1. Ableitung) und/oder in Abhängigkeit von mindestens einem der Parameter Änderungsgeschwindigkeit der Katalysatortemperatur, der Abgastemperatur und des Abgasmassenstromes (2. Ableitung) abgasrelevante Maßnahmen zur Steuerung der Temperatur des zumindest einen Katalysators durch Beeinflussung von zumindest einem Betriebsparameter, vorzugsweise des Lambdawertes des Mehrzylindermotors ergriffen werden können. Dabei ist die lambdasplitfähige Abgasreinigungsanlage des Mehrzylindermotors vorzugsweise derart ausgestaltet, dass zwischen dem Mehrzylindermotor und dem zumindest einen Katalysator mindestens zwei Passagen beziehungsweise Abgaspfade befindlich sind, die jeweils mit einem vorgebbaren Lambda beaufschlagbar sind. Nach einer besonders bevorzugten Ausführungsform besitzt die Abgasreinigungsanlage mindestens einen Hauptkatalysator mit mindestens zwei vorgeordneten Vorkatalysatoren, die jeweils in einem eigenen Abgaspfad angeordnet sind, wobei jeder Abgaspfad mit einem vorgebbaren Lambda separat beaufschlagbar ist.

Diese Mittel umfassen zudem ein Steuergerät, in das vorzugsweise in ein Motorsteuergerät integriert ist, in dem Modelle und Algorithmen zur koordinierten Steuerung von abgas- und leistungsrelevanter Maßnahmen in digitalisierter Form hinterlegt sind.

Die Steuerung und Koordination vorgenannter Mittel und sonstiger üblicher. Mittel erfolgt über das Steuergerät beziehungsweise das Motorsteuergerät.

Bei dem erfindungsgemäßen Mehrzylindermotor handelt es sich um einen Ottomotor, insbesondere einen direkt einspritzenden Ottomotor, oder einen Dieselmotor.

Vorteilhafterweise weist die Abgasreinigungsanlage beziehungsweise der zumindest eine Katalysator der Abgasreinigungsanlage des erfindungsgemäßen Mehrzylindermotors einen verringerten Edelmetallgehalt auf. Insbesondere bei dem Vorhandensein von Vorkatalysatoren ist eine deutliche Minderung des Edelmetallgehalts gegenüber dem Stand der Technik möglich.

Nach dem Stand der Technik werden bei Fahrzeugen mit direkteinspritzenden schichtladefähigen Ottomotoren, die im Neuen Europäischen Fahrzyklus NEFZ mit thermisch ungeschädigtem Katalysatorsystem, bestehend aus motornahem/n Vorkatalysatör/en und stromab angeordnetem/n NOₓ-Speicherkatalysator/en mit einer gespeicherten Schwefelmasse < 0,2 g/l Kätalysatorvolumen und einem zeitlichen Schichtbetriebsanteil von mindestens 250 s, vorzugsweise zumindest 350 s, eine HC-Emission von < 0,07 g/km und eine NOₓ-Emission von < 0,05 g/km erreichen, Katalysatorenmit Edelmetallgehalten von ≧ 4,67 g/dm³ (130g/ft³) eingesetzt.

Vorteilhafterweise kann bei dem erfindungsgemäßen Mehrzylindermotor der Edelmetallgehalt zumindest des oder der Vorkatalysator/en auf ≦ 3,59 g/dm³ (100 g/ft³) und besonders bevorzugt auf ≦ 2,87 g/dm³ (80 g/ft³) abgesenkt werden. Auch nach Ofenalterung des/der Vorkatalysator/en mit abgesenktem Edelmetallgehalt für 4 Stunden bei 1100 °C in Atmosphäre mit 2 % O₂ und 10 % H₂O und des/der NOₓ-Speicherkatalysator/en für 4 Stunden bei 850 °C in einer Atmosphäre mit 2 % O₂ und 10 % H₂O in demselben Fahrzeug wird gemäß voranstehend beschriebenen Verfahren im NEFZ eine HC-Emission von 0,1 g/km und eine NOₓ-Emission von 0,08 g/km nicht überschritten.

Weitere vorteilhafte Ausgestaltungen der Erfindung sind in den Unteransprüchen gekennzeichnet.

Die Erfindung wird nachfolgend in Ausführungsbeispielen anhand der zugehörigen Zeichnungen näher erläutert. Es zeigen:
- Figur 1: in einer schematischen Ansicht eine erfindungsgemäße Verbrennungsmotoranlage und
- Figur 2: ein Verlaufsschema des erfindungsgemäßen Verfahrens.

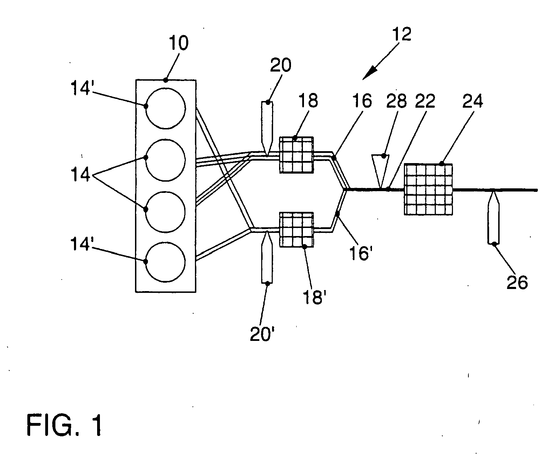

Die Figur 1 zeigt einen Mehrzylindermotor 10, dem eine zweiflutige Abgasreinigungsanlage 12 nachgeordnet ist. Jeweils zwei Zylinder 14, 14' des Mehrzylindermotors 10 sind den zwei Abgaspfaden 16, 16' der Abgasreinigungsanlage 12 zugeordnet. Jeder Abgaspfad 16, 16' verfügt über einen Vorkatalysator 18, 18', dem eine Lambdasonde 20, 20' vorgeschaltet ist. Stromab der Vorkatalysatoren 18, 18' werden beide Abgaspfade 16, 16' zu einem einzigen Abgaspfad 22 vereinigt, in dem ein Hauptkatalysator 24 angeordnet ist. Stromab des Hauptkatalysators 24 ist wiederum eine Lambdamessvorrichtung 26 befindlich, die durch eine Lambdasonde oder einen NOₓ-Sensor ausgebildet sein kann. Stromauf des Hauptkatalysators 24 ist ein Temperaturfühler 28 zur Ermittlung der Abgastemperatur beziehungsweise der Katalysatortemperatur angeordnet. Ein Abgaspfad 16 wird mit fettem und der zweite Abgasstrang 16' wird mit magerem Abgas beaufschlagt, wobei die Lambdawerte der beiden Abgasstränge vorzugsweise derart gesplittet sind, dass nach Zusammenführung der beiden Abgasstränge 16, 16' zu einem einzigen Abgasstrang 22 ein Lambdawert von in etwa 1 vorliegt, mit dem dann der Hauptkatalysator 24 beaufschlagt wird. Die durch die Lambdasonden 20, 20', die Lambdamessvorrichtung 26 und den Temperaturfühler 28 abgegebenen Signale werden in einem hier nicht dargestellten Steuergerät beziehungsweise Motorsteuergerät verarbeitet.

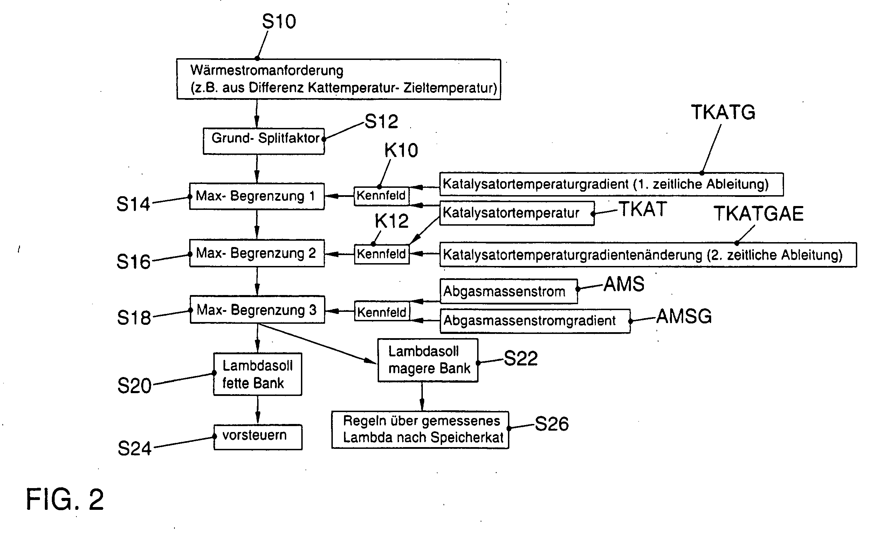

Anhand des Verlaufsschemas nach Figur 2 wird das erfindungsgemäße Verfahren dargestellt. Zuerst liegt eine Wärmestromanforderung S10 vor, die sich beispielsweise aus der Differenz der Katalysatortemperatur TKAT und der Zieltemperatur des Hauptkatalysators 24 ergibt. Dementsprechend erfolgt die Vorgabe eines Grundsplittfaktors S12, der begrenzenden Faktoren S14, S16, und S18 unterliegt. Der erste begrenzende Faktor S14 ist über ein Kennfeld K10 definiert, dem die Katalysatortemperatur TKAT sowie der Katalysatortemperaturgradient TKATG zugrunde liegen. Dementsprechend wird mit steigender Katalysatortemperatur TKAT der Energieeintrag begrenzt, wobei die Differenz der Katalysatortemperatur TKAT zur Zieltemperatur nicht zu berücksichtigen ist. Für ein zweites Kennfeld K12 des zweiten begrenzenden Faktors S16 wird ebenfalls die Katalysatortemperatur TKAT verwendet und zudem die Katalysatortemperaturgradientenänderung TKATGAE. Dadurch wird ein inhomogener Temperaturverlauf im Hauptkatalysator 24 berücksichtigt. Der Splitfaktor wird bei hohen positiven Temperaturgradienten im Hauptkatalysator 24, insbesondere wenn bereits hohe Temperaturen TKAT im Hauptkatalysator 24 vorliegen, begrenzt. Die Rücknahme des Splitfaktors fällt dabei umso stärker aus, wenn zusätzlich der positive Temperaturgradient TKATG eine progressive Zunahme aufweist, um das Risiko eines "Durchgehens" des Hauptkatalysators 24 sicher zu vermeiden. Durch den dritten begrenzenden Faktor S18 wird unter Verwendung eines dritten Kennfeldes K16 der Splitfaktor in Abhängigkeit des Abgasmassenstroms AMS sowie des Abgasmassenstromgradienten AMSG begrenzt, da mit verringertem Abgasmassenstrom auch dessen Kühleffekt abnimmt und da in Betriebssituationen, die einen hohen negativen Abgasmassenstromgradienten bedingen, der HC- und O₂-Gehalt im Abgas und damit der chemische Energieeintrag kurzzeitig stark zunimmt. Daraus folgt eine Vorgabe des Lambda-Solls S20 für den Abgaspfad 16 mit dem fetten Abgas und eine Vorgabe des Lambda-Solls S22 für den Abgaspfad 16' mit dem mageren Abgas, wobei das Lambda-Soll für den Abgaspfad 16 mit dem fetten Abgas in einem Schritt S24 vorgesteuert und das Lambda-Soll für den Abgaspfad 16' mit dem mageren Abgas in einem Schritt S26 über den nach dem Hauptkatalysator 24 gemessenen Lambdawert geregelt wird.

### BEZUGSZEICHENLISTE

- 10: Mehrzylindermotor
- 12: Abgasreinigungsanlage
- 14, 14': Zylinder
- 16, 16': Abgasstrang
- 18, 18': Vorkatalysator
- 20, 20': Lambdasonde
- 22: Abgasstrang
- 24: Hauptkatalysator
- 26: Lambdamessvorrichtung
- 28: Temperaturfühler

- S10: Wärmestromanforderung
- S12: Vorgabe eines Grundsplittfaktors
- S14: erster begrenzender Faktor
- S16: zweiter begrenzender Faktor
- S18: dritter begrenzender Faktor
- S20: Vorgabe des Lambda-Solls für den fetten Abgaspfad
- S22: Vorgabe des Lambda-Solls für den mageren Abgaspfad
- S24: Vorsteuerung
- S26: Regelung

- K10: erstes Kennfeld
- K12: zweites Kennfeld
- K14: drittes Kennfeld

- TKAT: Katalysatortemperatur
- TKATG: Katalysatortemperaturgradient
- TKATGAE: Katalysatortemperaturgradientenänderung
- AMS: Abgasmassenstrom
- AMSG: Abgasmassenstromgradient

## Patentansprüche

1. Verfahren zur Steuerung der Temperatur zumindest eines in einer Abgasreinigungsanlage (12) eines magerlauffähigen Mehrzylindermotors (10) angeordneten Katalysators, wobei Energie mittels eines Lambdasplits in die Abgasreinigungsanlage (12) eingebracht wird und die Begrenzung des Energieeintrages in Abhängigkeit von
(a) mindestens einem der Parameter Katalysatortemperatur, Abgastemperatur und Abgasmassenstrom und/oder
(b) mindestens einem der Parameter Änderung der Katalysatortemperatur, Änderung der Abgastemperatur und Änderung des Abgasmassenstromes
erfolgt, **dadurch gekennzeichnet, dass**
die Begrenzung des Energieeintrages zusätzlich in Abhängigkeit von
(c) mindestens einem der Parameter Änderungsgeschwindigkeit der Katalysatortemperatur, Änderungsgeschwindigkeit der Abgastemperatur und Änderungsgeschwindigkeit des Abgasmassenstromes
erfolgt.

2. Verfahren nach Anspruch 1, **dadurch gekennzeichnet, dass** die Abgasreinigungsanlage (12) zwischen dem Mehrzylindermotor (10) und dem zumindest einen Katalysator mindestens zwei Abgaspfade (16, 16') aufweist, die jeweils mit einem vorgebbaren Lambda beaufschlagbar sind.

3. Verfahren nach Anspruch 1 oder 2, **dadurch gekennzeichnet, dass** die Abgasreinigungsanlage (12) mindestens einen Hauptkatalysator (24) mit mindestens zwei vorgeordneten Vorkatalysatoren (18, 18') aufweist, wobei jeder Vorkatalysator (18, 18') in einem, jeweils mit einem vorgebbaren Lambda beaufschlagbaren Abgaspfad (16, 16') angeordnet ist.

4. Verfahren nach einem der Ansprüche 1 bis 3, **dadurch gekennzeichnet, dass** mit steigender, gemessener oder modellierter Temperatur des zumindest einen Katalysators, insbesondere des Hauptkatalysators (24), der Energieeintrag begrenzt wird.

5. Verfahren nach einem der Ansprüche 1 bis 4, **dadurch gekennzeichnet, dass** bei einem hohen positiven zeitlichen Temperaturgradienten im zumindest einen Katalysator, insbesondere im Hauptkatalysator (24), der Energieeintrag begrenzt wird.

6. Verfahren nach einem der Ansprüche 1 bis 5, **dadurch gekennzeichnet, dass** bei einer progressiven Zunahme eines positiven zeitlichen Temperaturgradienten im zumindest einen Katalysator, insbesondere im Hauptkatalysator (24), der Energieeintrag begrenzt wird.

7. Verfahren nach einem der Ansprüche 1 bis 6, **dadurch gekennzeichnet, dass** bei sinkendem Abgasmassenstrom der Energieeintrag begrenzt wird.

8. Verfahren nach einem der Ansprüche 1 bis 7, **dadurch gekennzeichnet, dass** sich die Höhe des Energieeintrags durch einen Splitfaktor bestimmt, der in Abhängigkeit einer Anforderung zum Energieeintrag festgelegt wird, durch den die Lambdawerte der einzelnen Abgaspfade (16, 16') in der Abgasreinigungsanlage (12) gegeben sind.

9. Verfahren nach Anspruch 8, **dadurch gekennzeichnet, dass** bei Regelung auf einen Lambdasollwert vor dem zumindest einen Katalysator, insbesondere dem Hauptkatalysator (24), das Lambda im mageren Abgaspfad (16') auf den aus dem geforderten Splitfaktor resultierenden mageren Lambdawert in Abhängigkeit vom gemessenen Lambda vor oder hinter dem zumindest einen Katalysator, insbesondere dem Hauptkatalysator (24), geregelt wird, während der fette Abgaspfad (16) vorgesteuert wird.

10. Verfahren nach Anspruch 8 oder 9, **dadurch gekennzeichnet, dass** bei sehr magerer Einstellung auf dem mageren Abgaspfad (16') entweder eine zumindest temporäre Anfettung des Gesamtgemisches zugelassen wird, sofern die Vorsteuerung des fetten Abgaspfades (16) nicht entsprechend angepasst wird, oder die Vorsteuerung des fetten Abgaspfades (16) zu mageren Lambdawerten beeinflusst wird, wobei gegebenenfalls der Splitfaktor zurückgenommen beziehungsweise der Energieeintrag reduziert wird.

11. Verfahren nach Anspruch 8 oder 9, **dadurch gekennzeichnet, dass** bei einem Lambda > 1,3 auf dem mageren Abgaspfad (16') entweder eine zumindest temporäre Anfettung des Gesamtgemisches zugelassen wird, sofern die Vorsteuerung des fetten Abgaspfades (16) nicht entsprechend angepasst wird, oder die Vorsteuerung des fetten Abgaspfades (16) zu mageren Lambdawerten beeinflusst wird, wobei gegebenenfalls der Splitfaktor zurückgenommen beziehungsweise der Energieeintrag reduziert wird.

12. Verfahren nach Anspruch 8 oder 9, **dadurch gekennzeichnet, dass** bei einem Lambda > 1,45 auf dem mageren Abgaspfad (16') entweder eine zumindest temporäre Anfettung des Gesamtgemisches zugelassen wird, sofern die Vorsteuerung des fetten Abgaspfades (16) nicht entsprechend angepasst wird, oder die Vorsteuerung des fetten Abgaspfades (16) zu mageren Lambdawerten beeinflusst wird, wobei gegebenenfalls der Splitfaktor zurückgenommen beziehungsweise der Energieeintrag reduziert wird.

13. Verfahren nach einem der Ansprüche 1 bis 12, **dadurch gekennzeichnet, dass** der zumindest eine Katalysator, insbesondere der Hauptkatalysator (24), ein NOₓ₋Speicherkatalysators ist, dessen Temperatur derart durch einen Energieeintrag in die Abgasreinigungsanlage gesteuert wird, dass eine Entschwefelung des NOₓ₋Speicherkatalysators erfolgt.

14. Verfahren nach einem der Ansprüche 1 bis 13, **dadurch gekennzeichnet, dass** die Begrenzung des Energieeintrages in Abhängigkeit von der Katalysatortemperatur, der zeitlichen Änderung der Katalysatortemperatur, der Änderungsgeschwindigkeit der Katalysatortemperatur und dem Abgasmassenstrom erfolgt.

15. Magerlauffähiger Mehrzylindermotor (10) mit einer lambdaspliffähigen Abgasreinigungsanlage (12), in der zumindest ein Katalysator angeordnet ist, wobei der Mehrzylindermotor (10) Mittel zur Steuerung der Temperatur des zumindest einen Katalysators aufweist, mit denen durch Beeinflussung von zumindest einem Betriebsparameter des Mehrzylindermotors (10) Energie mittels eines Lambdasplits in die Abgasreinigungsanlage (12) eingebracht wird und eine Begrenzung des Energieeintrages in Abhängigkeit von
(a) mindestens einem der Parameter Katalysatortemperatur, Abgastemperatur und Abgasmassenstrom und/oder
(b) mindestens einem der Parameter Änderung der Katalysatortemperatur, Änderung der Abgastemperatur und Änderung des Abgasmassenstromes und zusätzlich
(c) mindestens einem der Parameter Änderungsgeschwindigkeit der Katalysatortemperatur, Änderungsgeschwindigkeit der Abgastemperatur und Änderungsgeschwindigkeit des Abgasmassenstromes
erfolgt.

16. Mehrzylindermotor nach Anspruch 15, **dadurch gekennzeichnet, dass** die Abgasreinigungsanlage (12) zwischen dem Mehrzylindermotor (10) und dem zumindest einen Katalysator mindestens zwei Abgaspfade (16, 16') aufweist, die jeweils mit einem vorgebbaren Lambda beaufschlagbar sind.

17. Mehrzylindermotor nach Anspruch 15 oder 16, **dadurch gekennzeichnet, dass** die Abgasreinigungsanlage (12) mindestens einen Hauptkatalysator (24) mit mindestens zwei vorgeordneten Vorkatalysatoren (18, 18') aufweist, wobei jeder Vorkatalysator (18, 18') in einem Abgaspfad (16, 16') angeordnet ist, die jeweils mit einem vorgebbaren Lambda beaufschlagbar sind.

18. Mehrzylindermotor nach einem der Ansprüche 15 bis 17, **dadurch gekennzeichnet, dass** der zumindest eine Katalysator beziehungsweise der Hauptkatalysator (24) ein NOₓ-Speicherkatalysator ist.

19. Mehrzylindermotor nach Anspruch 17 oder 18, **dadurch gekennzeichnet, dass** der Edelmetallgehalt der zumindest zwei Vorkatalysatoren (18, 18') ≦ 3,59 g/dm³, insbesondere ≦ 2,87 g/dm³ ist.

20. Mehrzylindermotor nach einem der Ansprüche 15 bis 19, **dadurch gekennzeichnet, dass** die Mittel ein Steuergerät umfassen, in dem Modelle und Algorithmen zur koordinierten Steuerung von abgas- und leistungsrelevanter Maßnahmen in digitalisierter Form hinterlegt sind.

21. Mehrzylindermotor nach einem der Ansprüche 15 bis 20, **dadurch gekennzeichnet, dass** der Mehrzylindermotor (10) ein Ottomotor, insbesondere ein direkt einspritzender Ottomotor, oder ein Dieselmotor ist.

## Claims

1. Method for controlling the temperature of at least one catalytic converter arranged in an exhaust gas purification system (12) of a multicylinder engine (10) which is capable of running in lean-burn mode, in which energy is introduced into the exhaust gas purification system (12) by means of a lambda split, and the introduction of energy is limited as a function of
(a) at least one of the parameters catalytic converter temperature, exhaust gas temperature and exhaust gas mass flow, and/or
(b) at least one of the parameters change in the catalytic converter temperature, change in the exhaust gas temperature and change in the exhaust gas mass flow,
**characterized in that**
the introduction of energy is additionally limited as a function of
(c) at least one of the parameters rate of change of the catalytic converter temperature, rate of change of the exhaust gas temperature and rate of change of the exhaust gas mass flow.

2. Method according to Claim 1, **characterized in that** the exhaust gas purification system (12) has at least two exhaust gas paths (16, 16'), which can each be supplied with a predeterminable lambda, between the multicylinder engine (10) and the at least one catalytic converter.

3. Method according to Claim 1 or 2, **characterized in that** the exhaust gas purification system (12) has at least one main catalytic converter (24) with at least two primary catalytic converters (18, 18') arranged upstream of it, each primary catalytic converter (18, 18') being arranged in an exhaust gas path (16, 16') which can in each case be supplied with a predeterminable lambda.

4. Method according to one of Claims 1 to 3, **characterized in that** the introduction of energy is limited with a rising, measured or modelled temperature of the at least one catalytic converter, in particular of the main catalytic converter (24).

5. Method according to one of Claims 1 to 4, **characterized in that** the introduction of energy is limited in the event of a high positive time-based temperature gradient in the at least one catalytic converter, in particular in the main catalytic converter (24).

6. Method according to one of Claims 1 to 5, **characterized in that** the introduction of energy is limited in the event of a progressive increase in a positive time-based temperature gradient in the at least one catalytic converter, in particular in the main catalytic converter (24).

7. Method according to one of Claims 1 to 6, **characterized in that** the introduction of energy is limited in the event of a decreasing exhaust gas mass flow.

8. Method according to one of Claims 1 to 7, **characterized in that** the level of energy introduced is determined by a split factor which is established as a function of a request for the introduction of energy, giving the lambda values for the individual exhaust gas paths (16, 16') in the exhaust gas purification system (12).

9. Method according to Claim 8, **characterized in that** in the case of control to a lambda setpoint value upstream of the at least one catalytic converter, in particular the main catalytic converter (24), the lambda in the lean exhaust gas path (16') is closed-loop controlled to the lean lambda value which results from the required split factor as a function of the measured lambda upstream or downstream of the at least one catalytic converter, in particular the main catalytic converter (24), while the rich exhaust gas path (16) is under pilot control.

10. Method according to Claim 8 or 9, **characterized in that** in the event of a very lean setting on the lean exhaust gas path (16'), either at least temporary enriching of the overall mix is permitted, if the pilot control of the rich exhaust gas path (16) is not adapted accordingly, or the pilot control of the rich exhaust gas path (16) is influenced towards lean lambda values, with if appropriate the split factor being lowered or the introduction of energy being reduced.

11. Method according to Claim 8 or 9, **characterized in that** in the event of a lambda > 1.3 on the lean exhaust gas path (16'), either an at least temporary enriching of the overall mix is permitted, if the pilot control of the rich exhaust gas path (16) is not adapted accordingly, or the pilot control of the rich exhaust gas path (16) is influenced towards lean lambda values, with if appropriate the split factor being lowered or the introduction of energy being reduced.

12. Method according to Claim 8 or 9, **characterized in that** in the event of a lambda > 1.45 on the lean exhaust gas path (16'), either an at least temporary enriching of the overall mix is permitted, if the pilot control of the rich exhaust gas path (16) is not adapted accordingly, or the pilot control of the rich exhaust gas path (16) is influenced towards lean lambda values, with if appropriate the split factor being lowered or the introduction of energy being reduced.

13. Method according to one of Claims 1 to 12, **characterized in that** the at least one catalytic converter, in particular the main catalytic converter (24), is an NOₓ storage catalytic converter, the temperature of which is controlled by introduction of energy into the exhaust gas purification system in such a manner that the NOₓ storage catalytic converter is desulphurized.

14. Method according to one of Claims 1 to 13, **characterized in that** the introduction of energy is limited as a function of the catalytic converter temperature, the time-based change in the catalytic converter temperature, the rate of change of the catalytic converter temperature and the exhaust gas mass flow.

15. Multicylinder engine (10) which is capable of running in lean-burn mode and has an exhaust gas purification system (12) which is capable of lambda splitting and in which there is arranged at least one catalytic converter, the multicylinder engine (10) having means for controlling the temperature of the at least one catalytic converter, which means, by influencing at least one operating parameter of the multicylinder engine (10), introduce energy into the exhaust gas purification system (12) by means of a lambda split, and the introduction of energy being limited as a function of
(a) at least one of the parameters catalytic converter temperature, exhaust gas temperature and exhaust gas mass flow and/or
(b) at least one of the parameters change in the catalytic converter temperature, change in the exhaust gas temperature and change in the exhaust gas mass flow, and, in addition,
(c) at least one of the parameters rate of change of the catalytic converter temperature, rate of change of the exhaust gas temperature and rate of change of the exhaust gas mass flow.

16. Multicylinder engine according to Claim 15, **characterized in that** the exhaust gas purification system (12) has at least two exhaust gas paths (16, 16'), which can each be supplied with a predeterminable lambda, between the multicylinder engine (10) and the at least one catalytic converter.

17. Multicylinder engine according to Claim 15 or 16, **characterized in that** the exhaust gas purification system (12) has at least one main catalytic converter (24) with at least two primary catalytic converters (18, 18') arranged upstream of it, each primary catalytic converter (18, 18') being arranged in an exhaust gas path (16, 16') which can in each case be supplied with a predeterminable lambda.

18. Multicylinder engine according to one of Claims 15 to 17, **characterized in that** the at least one catalytic converter or the main catalytic converter (24) is an NOₓ storage catalytic converter.

19. Multicylinder engine according to Claim 17 or 18, **characterized in that** the precious metal content of the at least two primary catalytic converters (18, 18') is ≤ 3.59 g/dm³, in particular ≤ 2.87 g/dm³.

20. Multicylinder engine according to one of Claims 15 to 19, **characterized in that** the means comprise a control unit in which models and algorithms for the coordinated control of measures relevant to exhaust gas and power are stored in digitized form.

21. Multicylinder engine according to one of Claims 15 to 20, **characterized in that** the multicylinder engine (10) is a spark-ignition engine, in particular a direct-injection spark ignition engine, or a diesel engine.

## Revendications

1. Procédé de contrôle de la température d'au moins un catalyseur disposé dans un système d'épuration des gaz d'échappement (12) d'un moteur à plusieurs cylindres (10) apte à fonctionner en mode pauvre, de l'énergie étant introduite dans le système d'épuration des gaz d'échappement (12) au moyen d'une fente lambda et l'introduction d'énergie étant limitée en fonction :
a) d'au moins l'un des paramètres : température du catalyseur, température des gaz d'échappement et débit massique des gaz d'échappement et/ou
b) d'au moins l'un des paramètres : modification de la température du catalyseur, modification de la température des gaz d'échappement et modification du débit massique des gaz d'échappement
**caractérisé en ce que** l'introduction d'énergie est limitée en supplément en fonction
c) d'au moins l'un des paramètres : vitesse de modification de la température du catalyseur, vitesse de modification de la température des gaz d'échappement et vitesse de modification du débit massique des gaz d'échappement.

2. Procédé selon la revendication 1, **caractérisé en ce que** le système d'épuration des gaz d'échappement (12) comporte entre le moteur à plusieurs cylindres (10) et l'au moins un catalyseur au moins deux trajets de gaz d'échappement (16, 16') pouvant être soumis chacun à un lambda prédéfinissable.

3. Procédé selon la revendication 1 ou 2, **caractérisé en ce que** le système d'épuration des gaz d'échappement (12) comporte au moins un catalyseur principal (24) avec au moins deux précatalyseurs (18, 18') montés en amont, chaque précatalyseur (18, 18') étant disposé dans l'un des trajets de gaz d'échappement (16, 16') pouvant être soumis chacun à un lambda prédéfinissable.

4. Procédé selon l'une quelconque des revendications 1 à 3, **caractérisé en ce que** l'introduction d'énergie est limitée en fonction de la température croissante, mesurée ou modélisée de l'au moins un catalyseur, notamment du catalyseur principal (24).

5. Procédé selon l'une quelconque des revendications 1 à 4, **caractérisé en ce que** l'introduction d'énergie est limitée si le gradient de température temporaire est fortement positif dans l'au moins un catalyseur, notamment dans le catalyseur principal (24).

6. Procédé selon l'une quelconque des revendications 1 à 5, **caractérisé en ce que** l'introduction d'énergie est limitée en cas d'augmentation progressive d'un gradient de température temporaire positif dans l'au moins un catalyseur, notamment dans le catalyseur principal (24).

7. Procédé selon l'une quelconque des revendications 1 à 6, **caractérisé en ce que** l'introduction d'énergie est limitée si le débit massique des gaz d'échappement est en baisse.

8. Procédé selon l'une quelconque des revendications 1 à 7, **caractérisé en ce que** la valeur de l'introduction d'énergie est déterminée par un coefficient de splittage qui est fixé en fonction d'une exigence en matière d'introduction d'énergie, par lequel les valeurs lambda des trajets individuels des gaz d'échappement (16, 16') dans le système d'épuration des gaz d'échappement (12) sont données.

9. Procédé selon la revendication 8, **caractérisé en ce qu'**en cas de régulation à une valeur lambda de consigne à l'avant de l'au moins un catalyseur, notamment du catalyseur principal (24), dans le trajet des gaz d'échappement pauvres (16') le lambda est régulé à la valeur lambda pauvre résultant du coefficient de splittage exigé en fonction du lambda mesuré à l'avant ou à l'arrière de l'au moins un catalyseur, notamment du catalyseur principal (24), alors que le trajet des gaz d'échappement riches (16) est piloté.

10. Procédé selon la revendication 8 ou 9, **caractérisé en ce qu'**en cas de réglage très pauvre dans le trajet des gaz d'échappement pauvres (16'), soit un enrichissement au moins temporaire du mélange total est admis, dans la mesure où le pilotage du trajet des gaz d'échappement riches (16) n'est pas adapté en conséquence, ou le pilotage du trajet des gaz d'échappement riches (16) est influencé vers des valeurs lambda pauvres, le coefficient de splittage étant diminué le cas échéant ou l'introduction d'énergie étant réduite.

11. Procédé selon la revendication 8 ou 9, **caractérisé en ce qu'**en cas d'un lambda > 1,3 dans le trajet des gaz d'échappement pauvres (16'), soit un enrichissement au moins temporaire du mélange total est admis, dans la mesure où le pilotage du trajet des gaz d'échappement riches (16) n'est pas adapté en conséquence, ou le pilotage du trajet des gaz d'échappement riches (16) est influencé vers des valeurs lambda pauvres, le coefficient de splittage étant diminué le cas échéant ou l'introduction d'énergie étant réduite.

12. Procédé selon la revendication 8 ou 9, **caractérisé en ce qu'**en cas d'un lambda > 1,45 dans le trajet des gaz d'échappement pauvres (16'), soit un enrichissement au moins temporaire du mélange total est admis, dans la mesure où le pilotage du trajet des gaz d'échappement riches (16) n'est pas adapté en conséquence, ou le pilotage du trajet des gaz d'échappement riches (16) est influencé vers des valeurs lambda pauvres, le coefficient de splittage étant diminué le cas échéant ou l'introduction d'énergie étant réduite.

13. Procédé selon l'une quelconque des revendications 1 à 12, **caractérisé en ce que l'au** moins un catalyseur, respectivement le catalyseur principal (24) est un catalyseur accumulateur de NOₓ, dont la température est contrôlée par introduction d'énergie dans le système d'épuration des gaz d'échappement, de façon à assurer une désulfuration du catalyseur accumulateur de NOₓ.

14. Procédé selon l'une quelconque des revendications 1 à 13, **caractérisé en ce que** l'introduction d'énergie est limitée en fonction de la température du catalyseur, de la modification temporaire de la température du catalyseur, de la vitesse de modification de la température du catalyseur et du débit massique des gaz d'échappement.

15. Moteur à plusieurs cylindres (10) apte à fonctionner en mode pauvre, avec un système d'épuration des gaz d'échappement apte au splittage lambda, dans lequel est disposé au moins un catalyseur, le moteur à plusieurs cylindres (10) comportant des moyens de contrôle de la température de l'au moins un catalyseur, au moyen desquels par influence d'au moins un paramètre de service du moteur à plusieurs cylindres (12), de l'énergie est introduite dans le système d'épuration des gaz d'échappement (12) au moyen d'une fente lambda et l'introduction d'énergie étant limitée en fonction
a) d'au moins l'un des paramètres : température du catalyseur, température des gaz d'échappement et débit massique des gaz d'échappement et/ou
b) d'au moins l'un des paramètres : modification de la température de catalyseur, modification de la température des gaz d'échappement et modification du débit massique des gaz d'échappement et en supplément en fonction
c) d'au moins l'un des paramètres : vitesse de modification de la température du catalyseur, vitesse de modification de la température des gaz d'échappement et vitesse de modification du débit massique des gaz d'échappement.

16. Moteur à plusieurs cylindres selon la revendication 15, **caractérisé en ce que** le système d'épuration des gaz d'échappement (12) comporte entre le moteur à plusieurs cylindres (10) et l'au moins un catalyseur au moins deux trajets de gaz d'échappement (16, 16') pouvant être soumis chacun à un lambda prédéfinissable.

17. Moteur à plusieurs cylindres selon la revendication 15 ou 16, **caractérisé en ce que** le système d'épuration des gaz d'échappement (12) comporte au moins un catalyseur principal (24) avec au moins deux précatalyseurs (18, 18') montés en amont, chaque précatalyseur (18, 18') étant disposé dans l'un des trajets de gaz d'échappement (16, 16') pouvant être soumis chacun à un lambda prédéfinissable.

18. Moteur à plusieurs cylindres selon l'une quelconque des revendications 15 à 17, **caractérisé en ce que** l'au moins un catalyseur, respectivement le catalyseur principal (24) est un catalyseur accumulateur de NOx.

19. Moteur à plusieurs cylindres selon la revendication 17 ou 18, **caractérisé en ce que** la teneur en métal précieux des au moins deux précatalyseurs (18, 18') est ≤ 3,59 g/dm³, notamment ≤ 2,87 g/dm³.

20. Moteur à plusieurs cylindres selon l'une quelconque des revendications 15 à 19, **caractérisé en ce** les moyens comprennent un instrument de contrôle dans lequel sont sauvegardés des modèles et des algorithmes pour le contrôle coordonné d'actions déterminantes en matière de gaz d'échappement et de puissance, sous forme numérisée.

21. Moteur à plusieurs cylindres selon l'une quelconque des revendications 15 à 20, **caractérisé en ce que** le moteur à plusieurs cylindres est un moteur à allumage par étincelle, notamment un moteur à allumage par étincelle à injection directe, ou un moteur diesel.
